**Europäisches Patentamt**

**European Patent Office**

**Office européen des brevets**

(11) Veröffentlichungsnummer: **0 148 472**
**A2**

(12) # EUROPÄISCHE PATENTANMELDUNG

(21) Anmeldenummer: **84115791.0**

(51) Int. Cl.⁴: **B 60 N 1/02**

(22) Anmeldetag: **19.12.84**

(30) Priorität: **27.12.83 US 565313**

(71) Anmelder: **DEERE & COMPANY, 1 John Deere Road, Moline Illinois 61265 (US)**

(72) Erfinder: **Hock, John Joseph, 407 South Lincoln Avenue, Beaver Dam, Wisconsin 53916 (US)**

(43) Veröffentlichungstag der Anmeldung: **17.07.85 Patentblatt 85/29**

(74) Vertreter: **Feldmann, Bernhard et al, DEERE & COMPANY European Office, Patent Department Steubenstrasse 36-42 Postfach 503, D-6800 Mannheim 1 (DE)**

(84) Benannte Vertragsstaaten: **DE FR GB**

(54) **Höhenverstellbarer Sitz.**

(57) Ein höhenverstellbarer Sitz (12) greift über einen Sitzträger (32) und mindestens einen Halter (20) an einer Plattform (18), beispielsweise der eines Fahrzeuges, an. Der Sitzträger (32) hat unterschiedlich lange Schenkel (34, 38), und die Höhe des Sitzes (12) kann dadurch variiert werden, daß wahlweise der Sitz (12) über den langen Schenkel (34) oder den kurzen Schenkel (38) an dem Halter (20) bzw. der Plattform (18) angreift.

EP 0 148 472 A2

## Höhenverstellbarer Sitz

Die Erfindung betrifft einen höhenverstellbaren Sitz, insbesondere für ein Fahrzeug, der über mindestens einen Sitzträger und mindestens einen Halter auf einer Plattform angeordnet ist.

Ein derartiger Sitz (US-A-1 826 643) ist mittels zweier als Halter dienender Stützen, die auf eine Plattform einer Lokomotive aufgeschraubt sind, und zweier Sitzträger in einer bestimmbaren Höhe über der Plattform festlegbar. Dazu umgreift jeder Sitzträger jeweils eine Stütze und kann gegenüber dieser vertikal verschoben werden. Die Stützen weisen an einer Vorderkante mehrere Kerben auf, in die ein an jedem Sitzträger angeformter Nocken eingreifen kann. Um die Sitzträger mit dem an diesen vertikal schwenkbar angebrachten Sitz in eine bestimmte Höhe gegenüber der Plattform zu bringen, werden lediglich die Sitzträger durch ein geringfügiges Nach-Oben-Kippen außer Eingriff mit den Kerben gebracht, nach oben oder unten entlang den Stützen verschoben und die Nocken erneut in Eingriff mit einem Paar Kerben gebracht. Die Sitzträger und die Stützen sind solide und stark dimensioniert ausgeführt, wobei die Sitzträger zudem als Gußelement hergestellt sind, um den auf die Stützen und die Sitzträger einwirkenden Biegemomenten standhalten zu können. Ferner sind die Sitzträger zum Aufnehmen der Biegebelastung in der Vertikalebene dreiecksförmig ausgebildet und ragen daher bis weit unter den Sitz.

Dieser bekannte Sitz mitsamt seinen Sitzträgern und Haltern besitzt den Nachteil, daß die Sitzträger mit den Stützen zu aufwendig sind für Anwendungsfälle, in denen es nicht darauf ankommt, daß der Sitz schnell und bequem in der Höhe verstellt werden kann. Die schwere Gußausführung der Sitzträger ist zu kosten- und materialaufwendig und für eine Verstellung von Hand nicht zumutbar. Ferner schließt der nach unten über den Sitz hinausragende Teil der Sitzträger eine Anwendung dieses Sitzes in Fällen aus, in denen der Sitz bis fast direkt auf die Plattform aufgesetzt werden muß.

Die der Erfindung zugrunde liegende Aufgabe wird darin gesehen, die Höhenverstellbarkeit des Sitzes durch einfache Mittel zu erreichen.

Diese Aufgabe ist erfindungsgemäß dadurch gelöst worden, daß der Sitzträger aus einem kurzen und einem langen Schenkel, die beide miteinander verbunden sind, besteht, wobei wahlweise der lange Schenkel mit dem Sitz und der kurze Schenkel mit dem Halter oder der kurze Schenkel mit dem Sitz und der lange Schenkel mit dem Halter verbindbar ist.

Auf diese Weise kann der Sitz einfach durch eine umgekehrte Montage eines Teiles, nämlich des Sitzträgers, auf eine andere Höhe gebracht werden. Der Höhenunterschied zwischen beiden Höhenstellungen ist über die Differenz der Schenkellängen bestimmbar. Eine derartige Höhenverstellung des Sitzes ist zwar nicht in Sekundenschnelle und in der Regel auch nicht mit einem einzigen Handgriff durchführbar; jedoch kommt es auf derartige Merkmale auch nicht an, wenn der Sitz hauptsächlich für den Einsatz an Fahrzeugen, z. B. an einem selbstfahrenden Rasenmäher, gedacht ist, deren Fahrzeugführer selten oder gar nicht wechselt und der stets die gleiche Sitzhöhe einhält. Selbstverständlich lassen sich derartige Sitze mit dem dazugehörigen Sitzträger auch überall dort mit Vorteil einsetzen, wo es sich um Sitze handelt, die in ihrer Höhe recht selten verstellt werden sollen. Diese müssen nicht notwendigerweise auch an einem Fahrzeug angebracht sein.

Dadurch, daß nach einer erfinderischen Fortentwicklung des Erfindungsgedankens bei einem senkrecht zu der Plattform verlaufenden Halter der lange Schenkel rechtwinklig zu dem kurzen Schenkel verläuft, wird gewährleistet, daß der Sitz

0148472

bei einem Höhenverstellen sich ausschließlich vertikal bewegt und eine Horizontalbewegung auf Bedienungselemente zu oder von diesen weg unterbleibt.

Wenn bei einem höhenverstellbaren Sitz, bei dem der Halter mindestens ein oberes und ein unteres Befestigungsloch, die unterschiedlich weit von der Plattform entfernt liegen, und Befestigungsmittel aufweist, der lange Schenkel eine erste und eine zweite zum Schenkelende unterschiedlich weit entfernte Ausnehmung und der kurze Schenkel mindestens eine Bohrung aufweist und der jeweilige Schenkel in unterschiedlichen Stellungen mit unterschiedlichem Abstand zu der Plattform mittels der Befestigungsmittel an dem Halter festlegbar ist, dann lassen sich mindestens vier unterschiedliche Höhenstellungen entwickeln, und zwar eine oberste, eine obere, eine untere und eine unterste. Dabei ist in der obersten und in der oberen Stellung der lange Schenkel und in der unteren und in der untersten Stellung der kurze Schenkel mit dem Halter verbunden, und in der obersten Stellung sind die erste Ausnehmung mit dem oberen Befestigungsloch, in der oberen Stellung die erste und die zweite Ausnehmung mit dem oberen und dem unteren Befestigungsloch, in der unteren Stellung das obere Befestigungsloch mit der Bohrung und in der untersten Stellung das untere Befestigungsloch mit der Bohrung jeweils über die Befestigungselemente verbunden.

In einer weiteren nutzbringenden Ausgestaltung gemäß der Erfindung ist vorgesehen, daß der Sitz über mindestens ein Federelement an dem Sitzträger angreift, wobei das Federelement wahlweise mit dem langen oder dem kurzen Schenkel verbindbar ist. Dieses Merkmal trägt bei uneingeschränkter Funktionsfähigkeit des Sitzträgers zu einem zusätzlichen Komfort für einen den Sitz benutzenden Fahrer bei.

Wenn bei einem höhenverstellbaren Sitz jeweils zwei Sitzträger und zwei Halter vorgesehen sind, können der Sitzträger und der Halter unter extrem geringem Materialaufwand und unter Beibehaltung der Gesamtfestigkeit hergestellt werden, indem sich die Sitzträger und die Halter mit Abstand zueinander quer unterhalb des Sitzes erstrecken. Dieses Merkmal führt nämlich zu einer allseitigen Abstützung des Sitzes auf der Plattform.

In analoger Anwendung des Erfindungsgedankens kann die Höhenverstellbarkeit eines Sitzes mit zwei Sitzträgern auch dadurch erreicht werden, daß die Sitzträger aus je einem Vierkantrohr mit rechteckigem Querschnitt gebildet sind, die zwei Breit- und zwei Schmalseiten aufweisen, wobei wahlweise eine Breit- oder eine Schmalseite jedes Vierkantrohres mit der Plattform verbindbar ist. Derartige Vierkantrohre sind genormte und somit leicht im Handel erhältliche Halbzeuge, die wesentlich zu einer kostengünstigen Herstellung der Sitzträger beitragen, wobei nach einem weiteren vorteilhaften Vorschlag gemäß der Erfindung von der Fahrbahn herrührende Stöße auf den Sitz dadurch gemildert werden, daß sich zwischen den Sitzträgern und dem Sitz Federelemente erstrecken.

In der Zeichnung sind zwei nachfolgend näher beschriebene Ausführungsbeispiele der Erfindung dargestellt. Es zeigt:

> Fig. 1   eine Sitzanordnung in perspektivischer Darstellung,

> Fig. 2   die Sitzanordnung mit einem erfindungsgemäßen Gestell in mehreren möglichen Stellungen und in Seitenansicht,

Fig. 3 einen Vertikalschnitt durch das Gestell gemäß der Linie 3 - 3 in Fig. 2 und in Blickrichtung der dazugehörigen Pfeile und

Fig. 4 eine perspektivische Darstellung der Sitzanordnung ähnlich der aus Fig. 1, jedoch mit einem anderen Gestell.

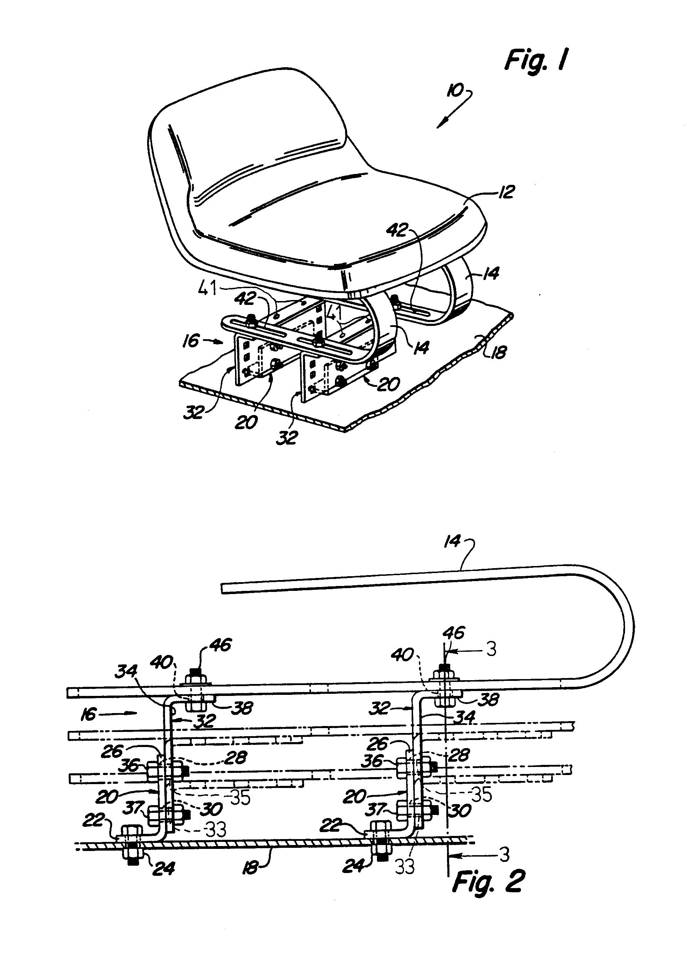

Eine in Fig. 1 dargestellte Sitzanordnung 10 weist einen geformten Sitz 12 auf, der auf oberen freien Abschnitten eines Paares zurückgebogener Federelemente in der Form von Flachfedern 14 aufmontiert ist. Der Sitz kann beispielsweise auf einen Ackerschlepper oder auf einen Rasenmäher aufmontiert sein. Untere Abschnitte der Flachfedern 14 sind auf einem vertikal einstellbaren Gestell 16 befestigt, das wiederum auf einer flachen Oberfläche einer Plattform oder eines Rahmens 18 angebracht ist.

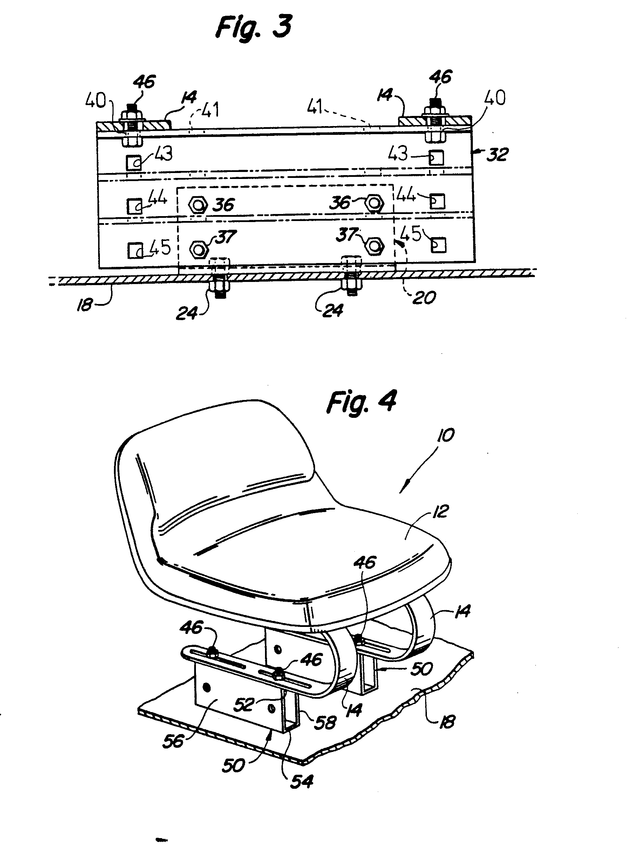

Wie am besten aus den Figuren 2 und 3 zu ersehen ist, enthält das Gestell 16 ein Paar identischer Halter oder Konsolen 20, die aus L-förmigen Blechteilen gebildet sind. Die Konsolen 20 erstrecken sich quer mit Bezug auf die normale Sitzrichtung einer Person auf dem Sitz 12 und weisen in Längsrichtung einen Abstand zueinander auf. Jede Konsole 20 besitzt einen horizontal gelegenen ersten Schenkel 22, der zur flachen Oberfläche des Rahmens 18 hin gerichtet und an dem Rahmen 18 durch ein Paar Schrauben 24 befestigt ist. Die Konsolen 20 haben ferner jeweils noch einen zweiten vertikal ausgerichteten Schenkel 26, die jeweils mit einem oberen und einem unteren Paar in Querrichtung zueinander einen Abstand aufweisender Befestigungslöcher 28 und 30 versehen sind. Das Gestell 16 enthält ein Paar identischer Sitzträger oder Sitzhaltekonsolen 32, die ebenfalls aus gleichen L-förmigen Blechteilen gebildet sind. Die Sitzhaltekonsolen 32 sind länger als die Konsolen 20 und enthalten jeweils einen ersten und einen zweiten, langen und kurzen Schenkel 34 und 38. Das Gestell 16 und somit auch der Sitz 12 können vier unterschiedlich hohe Stellungen einnehmen, nämlich eine oberste, eine obere, eine untere und eine unterste, die im folgenden erläutert werden, wobei die oberste Stellung nicht aus der Zeichnung ersichtlich ist. Wenn sich das Gestell 16 in seiner in den Figuren 2 und 3 in ununterbrochenen Linien dargestellten oberen Stellung befindet, dann sind jeweils die ersten Schenkel 34 der Sitzhaltekonsolen 32 mit den vertikal ausgerichteten Schenkeln 26 der Konsolen 20 durch ein erstes Paar Schrauben 37 verbunden. Dabei erstrecken sich die Schrauben 37 durch ein unteres Paar Ausnehmungen oder Löcher 33, die in jedem der ersten Schenkel 34 vorgesehen sind, und durch ein unteres Paar Befestigungslöcher 30 der zweiten Schenkel 26. Ferner ist ein zweites Paar Schrauben 36 zur Befestigung vorgesehen, die sich jeweils durch ein oberes Paar Ausnehmungen oder Löcher 35, die in jedem der ersten Schenkel 34 vorgesehen sind, und durch die oberen Befestigungslöcher 28 in den zweiten Schenkeln 26 hindurch erstrecken. Die Schrauben 36 und 37 stehen lediglich beispielhaft für irgendwelche Befestigungsmittel.

In der obersten Stellung sind die Sitzhaltekonsolen 32 gegenüber den Konsolen 20 um ein Befestigungsloch nach oben versetzt, so daß das untere Paar Löcher 33 der Sitzhaltekonsolen 32 mit den oberen Befestigungslöchern 28 der Konsolen 20 fluchtet und sich durch diese die Schrauben 36 oder 37 erstrecken.

Die zweiten Schenkel 38 sind relativ kurz und jeweils mit einem äußeren Paar in Querrichtung einen Abstand zueinander aufweisender Öffnungen 40 und einem inneren Paar in Querrichtung getrennter Bohrungen 41 versehen. Die unteren Abschnitte der Flachfedern 14 liegen über den zweiten Schenkeln 38, und Schrauben 46 sind durch Schlitze 42 in den Flachfedern 14 und die Öffnungen 40 gesteckt.

Die unterste Stellung des Gestells 16 ist in den Figuren 2 und 3 mit den untersten unterbrochenen Linien angedeutet. Diese unterste Stellung wird erreicht, indem die Sitzhaltekonsolen 32 sowohl von den Flachfedern 14 wie auch von den Konsolen 20 getrennt werden. Die Sitzhaltekonsolen 32 werden danach derart angeordnet, daß ihre kurzen zweiten Schenkel 38 jeweils an die zweiten Schenkel 26 der Konsolen 20 angelegt und an diesen befestigt werden, und zwar durch die Schrauben 37, die in dem unteren Paar der Befestigungslöcher 30 der Konsolen 20 und in den Bohrungen 41 der Sitzhaltekonsolen 32 aufgenommen werden. Das Paar Schrauben 46 wird dann in ein ausgewähltes Paar von drei Paaren Bohrungen 43, 44 und 45, die gemäß Fig. 3 von oben nach unten in den Sitzhaltekonsolen 32 vorhanden sind, und in die Schlitze 42 in den Flachfedern 14 gesteckt und darin gesichert.

Die untere Stellung des Gestells 16 wird ausgehend von der untersten Stellung dadurch erreicht, daß die ersten Schrauben 37 aus dem unteren Paar Befestigungslöcher 30 der Konsolen 20 entfernt, die Sitzhaltekonsolen 32 angehoben und die ersten Schrauben 37 wieder durch das obere Paar Befestigungslöcher 28 der Konsolen 20 gesteckt werden.

Wenn sich das Gestell 16 in einer anderen als in seiner oberen Stellung befindet, können die zweiten Schrauben 36 in den ungenutzten Löchern der Konsolen 20 untergebracht werden.

Im folgenden wird Bezug genommen auf eine alternative Ausführungsform der Sitzanordnung 10, bei der die Konsolen 20 weggelassen worden sind und das Paar Sitzhaltekonsolen 32 durch ein Paar Sitzträger 50 ersetzt worden ist, die aus gleichen Rohren mit rechteckigem Querschnitt gebildet sind. Das Paar Sitzträger 50 erstreckt sich längs unterhalb der Flachfedern 14 und ist lösbar mit diesen über Schrauben 46 verbunden. In der Stellung der Sitzträger 50, wie sie in Fig. 4 angegeben ist, werden die Schrauben 46 in Öffnungen

aufgenommen, die in eine erste Schmalseite 52 jedes Sitzträgers 50 eingebracht werden, während eine dieser gegenüberliegende Schmalseite 54 gegenüber dem Rahmen 18 durch in der Fig. 4 nicht sichtbare Schrauben 24 gesichert ist. Sich gegenüberliegende Breitseiten 56 und 58 erstrecken sich zwischen den Schmalseiten 52, 54 und ermöglichen es, den Sitz 12 in einer gewünschten Stellung anzubringen. Der Sitz 12 kann in eine untere Stellung gebracht werden, indem man die Sitzträger 50 von den Flachfedern 14 und dem Rahmen 18 löst und dann die Flachfedern 14 mit den Breitseiten 56 der Sitzträger 50 und die Breitseiten 58 der Sitzträger 50 mit dem Rahmen 18 verbindet. Die in Fig. 4 dargestellte Stellung entspricht der oberen Stellung des Sitzes 12.

<u>Patentansprüche</u>

1. Höhenverstellbarer Sitz (12), insbesondere für ein Fahrzeug, der über mindestens einen Sitzträger (32) und mindestens einen Halter (20) auf einer Plattform (18) angeordnet ist, dadurch gekennzeichnet, daß der Sitzträger (32) aus einem kurzen und einem langen Schenkel (38 und 34), die beide miteinander verbunden sind, besteht, wobei wahlweise der lange Schenkel (34) mit dem Sitz (12) und der kurze Schenkel (38) mit dem Halter (20) oder der kurze Schenkel (38) mit dem Sitz (12) und der lange Schenkel (34) mit dem Halter (20) verbindbar ist.

2. Höhenverstellbarer Sitz nach Anspruch 1, wobei der Halter (20) senkrecht zu der Plattform (18) verläuft, dadurch gekennzeichnet, daß der lange Schenkel (34) rechtwinklig zu dem kurzen Schenkel (38) verläuft.

3. Höhenverstellbarer Sitz nach Anspruch 1 oder 2, wobei der Halter (20) mindestens ein oberes und ein unteres Befestigungsloch (28, 30), die unterschiedlich weit von der Plattform (18) entfernt liegen, und Befestigungsmittel (36, 37) aufweist, dadurch gekennzeichnet, daß der lange Schenkel (34) eine erste und eine zweite zum Schenkelende unterschiedlich weit entfernte Ausnehmung (33, 35) und der kurze Schenkel (38) mindestens eine Bohrung (41) aufweist und der jeweilige Schenkel (34, 38) in unterschiedlichen Stellungen mit unterschiedlichem Abstand zu der Plattform (18) mittels der Befestigungsmittel (36, 37) an dem Halter (20) festlegbar ist.

4. Höhenverstellbarer Sitz nach einem oder mehreren der vorherigen Ansprüche, dadurch gekennzeichnet, daß der Sitz (12) über mindestens ein Federelement (14) an dem Sitzträger (32) angreift, wobei das Federelement (14) wahlweise mit dem langen oder dem kurzen Schenkel (34 oder 38) verbindbar ist.

5. Höhenverstellbarer Sitz nach einem oder mehreren der vorherigen Ansprüche, wobei jeweils zwei Sitzträger (32) und zwei Halter (20) vorgesehen sind, dadurch gekennzeichnet, daß sich die Sitzträger (32) und die Halter (20) mit Abstand zueinander quer unterhalb des Sitzes (12) erstrecken.

6. Höhenverstellbarer Sitz mit zwei Sitzträgern (50), insbesondere für ein Fahrzeug, dadurch gekennzeichnet, daß die Sitzträger (50) aus je einem Vierkantrohr mit rechteckigem Querschnitt gebildet sind, die zwei Breit- und zwei Schmalseiten (56, 58 und 52, 54) aufweisen, wobei wahlweise eine Breit- oder eine Schmalseite (56, 58 oder 52, 54) jedes Vierkantrohres mit der Plattform (18) verbindbar ist.

7. Höhenverstellbarer Sitz nach Anspruch 6, dadurch gekennzeichnet, daß sich zwischen den Sitzträgern (50) und dem Sitz (12) Federelemente (14) erstrecken.

1/2          0148472

Fig. 1

Fig. 2

*Fig. 3*

*Fig. 4*